# EUROPEAN PATENT APPLICATION

(11) **EP 4 570 454 A1**
(43) Date of publication of application: **18.06.2025**
(21) Application number: 23216262.8
(22) Date of filing: 13.12.2023
(51) Int. Cl.: B25J 11/00, B25J 15/00, B25J 15/06

(54) **A ROBOT PICKING ASSEMBLY**

(71) Applicant: Kitopi One SPV Limited, Abu Dhabi (AE)
(72) Inventor: Carstens, Ricky Valdemar, 8700 Horsens (DK)
(74) Representative: Patrade A/S

(57) **Abstract**

The invention relates to a robot picking assembly (900) for picking up at least one associated food item (2), such as a packaging comprising food, the robot picking assembly comprising: a robotic arm (910); said robotic arm comprising: an elongated cylindrical chamber (920), at least two internal air channels (930), a first and a second internal air channel, such as pipes or tubes, at least two air suction connections (940), a first and a second air suction connection, at least two vacuum fittings (950), a first and a second vacuum fitting, at least two suction cups; an inner suction cup (960), being the smallest suction cup, and an outer suction cup (970), being the biggest suction cup, said suction cups being positioned at the distal end (D) of the robotic arm (950) and being configured to be arranged in contact with the associated food items (2) to pick up and release associated food items.

Furthermore, the invention relates to a method for picking up a food product, preferably by a robot picking assembly (900).

## Description

### FIELD OF THE INVENTION

The present invention relates to a robot picking assembly for picking up at least one associated food item, such as a packaging comprising food, the robot picking assembly comprising: a robotic arm; said robotic arm comprising: an elongated cylindrical chamber, at least two internal air channels, a first and a second internal air channel, such as pipes or tubes, at least two air suction connections, a first and a second air suction connection, preferably at least two vacuum fittings, a first and a second vacuum fitting, at least two suction cups; an inner suction cup, being the smallest suction cup, and an outer suction cup, being the biggest suction cup, said suction cups being positioned at the distal end of the robotic arm and being configured to be arranged in contact with the associated food items to pick up and release associated food items, wherein the inner suction cup is concentrically positioned inside the outer suction cup, wherein a first internal air channel preferably is connected to the inner suction cup by a first vacuum fitting and a second internal air channel is connected to the outer suction cup by a second vacuum fitting, wherein a first internal air channel is connected to a first air suction connection and a second internal air channel is connected to a second air suction connection, and wherein the air suction connections are positioned at the proximal end of the chamber.

Furthermore, the present invention relates to a method for picking up a food product, said method comprising the steps of: providing a gripping position of the food item by a vision system, determining which of at least two suction cups is to be used for picking up the food item based on information provided by an ID of the food item, arranging the determined suction cup(s) in contact with the item, starting a suction pressure in at least one internal air channel connected to the suction cup(s) determined to pick up the food item, picking up the food item, moving a robotic arm, and releasing the food item at a package area and/or a package object.

### BACKGROUND OF THE INVENTION

Within the area of food handling, numerous solutions are known, and numerous systems for online food ordering, handling the online food order and delivering the food are available.

However, none of the systems provide the opportunity to automatically handle food items from the production of the food to a gathered order via food item ID's, and further provide the opportunity for orders from different kitchens and/or brands to be collected into one order.

When handling a large number of food orders and thereby handling an even greater number of food items, an assembly for handling the food items is essential, such as a robot assembly for picking up the food items automatically, and such as providing an assembly capable of lifting a great amount of different and variating items, and such as providing an assembly fitting into any order package, such as a bag.

Hence, an improved assembly for handling and picking up one or more associated food item(s) and further an improved method for picking up and handling food items, would be advantageous.

### OBJECT OF THE INVENTION

It is an object of the present invention to provide an alternative to the prior art.

In particular, it may be seen as an object of the present invention to provide a robot picking assembly that solves the above-mentioned problems.

### DESCRIPTION OF THE INVENTION

Thus, the above-described object and several other objects are intended to be obtained in a first aspect of the invention by providing a robot picking assembly for picking up at least one associated food item, such as a packaging comprising food, the robot picking assembly comprising:
- a robotic arm; said robotic arm comprising:
   - an elongated cylindrical chamber,
   - at least two internal air channels, a first and a second internal air channel, such as pipes or tubes,
   - at least two air suction connections, a first and a second air suction connection,
   - at least two vacuum fittings, a first and a second vacuum fitting,
   - at least two suction cups;
   - an inner suction cup, being the smallest suction cup, and
   - an outer suction cup, being the biggest suction cup,
   - said suction cups being positioned at the distal end of the robotic arm and being configured to be arranged in contact with the associated food items to pick up and release associated food items,

   wherein the inner suction cup is concentrically positioned inside the outer suction cup,
   wherein a first internal air channel is connected to the inner suction cup by a first vacuum fitting and a second internal air channel is connected to the outer suction cup by a second vacuum fitting,
   wherein a first internal air channel is connected to a first air suction connection and a second internal air channel is connected to a second air suction connection, and wherein the air suction connections are positioned at the proximal end of the chamber.

The invention is particularly, but not exclusively, advantageous for providing an assembly for automatically picking up the food items and being capable of lifting and handling a great amount of different and variating food items.

Furthermore, the assembly fits into more or less any order package, such as a bag, since the robot assembly has an elongated robot arm with a smooth surface without protrusions.

Also, the position of the air suction connections provides an advantage, since the connections are not damaging the bag when positioning the food in the bag.

Preferably, the assembly is a fully automated robot picking assembly.

In the context of the present invention, it should be understood that "food item" is food packaging, such as a box, a bowl, paper/wrap, or any desired packaging for food, wherein the packaging comprises a prepared/cooked food product, such as a burger, pizza, salad, sandwich, or any food placed in an order.

In the context of the present invention, it should be understood that "robotic arm" is the end of arm tooling for gripping the food item being positioned at the end of the robot picking assembly.

Furthermore, the invention provides a robotic arm being optimal for gripping all kinds of food items without damaging neither the food item, nor the packaging, nor the food product in the packaging.

In one embodiment of the invention, the at least two internal air channels and the at least two vacuum fittings are positioned inside the elongated cylindrical chamber, and/or wherein the at least two internal air channels are positioned in the wall of the elongated cylindrical chamber.

The embodiment is particularly, but not exclusively, advantageous for providing a compact and smooth robot arm.

In one embodiment of the invention, when in use, suction pressure is provided through one of or both of the two internal vacuum pipes.

The embodiment is particularly, but not exclusively, advantageous for providing a robot arm having numerous mode selections, thereby providing a picking assembly that can handle and pick up any food item in the optimal and most non-damaging way.

In the context of the present invention, "suction pressure" may be understood as providing vacuum through the internal air channels.

In one embodiment of the invention, the assembly further comprises:
- a control system configured to receive a data input comprising at least:
   - height, width, and length of the food item, and/or
   - an indication of an order number of the food item,
   and configured to control the suction pressure in the air tubes for creating a vacuum when picking up the associated food item.

The embodiment is particularly, but not exclusively, advantageous for providing a system of the robot picking assembly controlling the picking of the food item based on the inputs of the specific food item to be handled and picked, thereby optimizing the handling and picking, and decreasing the risk of destroying or dropping the food item.

The control system further provides the opportunity to provide a fully automated robot picking assembly.

In one embodiment of the invention, the assembly further comprises:
- a vision system, such as a vision camara, configured to provide information of:
   - a gripping position of a food item to be picked up.

The embodiment is particularly, but not exclusively, advantageous for providing a system that can identify the food item to be picked and from this identification provide information on the optimal gripping position.

Furthermore, it is advantageous for providing a system wherein the repositioning of a food item is performed optimally, such that the food product in the food packaging is not damaged.

The vision system may perform the best possible gripping position by identifying the center position of the surface of the food item. When determining the center position, the X and Y (surface dimensions) position is determined and preferably also the Z (height) position and the rotation/angle of the food item is determined.

This will provide optimal information for the system such that the robotic arm can grip/collect the food item correctly.

However, it should be understood that within the invention the gripping does not necessarily has to be at the center, though it is often the preferred gripping position.

If the vision system is a 2D system, the vision camera determines the surface dimensions X and Y. The Z dimension, being the height, is obtained through the ID which comprises information stored in a database about the dimensions of the food item/food packaging.

If the vision system is a 3D system, the vision camera determines both the surface dimensions X and Y and the Z dimension being the height of the food item and further also the rotation/angle of the item.

The vision system, such as a vision camera, provides the possibility of capturing information of the food items positioned at a storage area. The food items are preferably each provided with an ID, and the vision system is at least capable of obtaining information from the ID and thereby automatically grip the food item, and furthermore sort the items into the right gathered order. The system may also be able to obtain information of the food item, such as shape and dimensions, without the ID.

In the context of the present invention, it should be understood that the vision system may be both a 2D and/or 3D vision system.

In one embodiment of the invention, the vision system further provides information from:
- an ID, such as a bar code, a matrix code, a QR code, Radio Frequency ID, the information provided from the ID being at least:
   - height, width, and length of the food item, and/or
   - an indication of an order number of the food item.
Preferably, the ID is provided on a pre-printed label positioned on the associated food item.

In the context of the present invention, it should be understood that "ID" can be various IDs, such as a bar code, a matrix code, a QR code, Radio Frequency ID, etc. The invention should not be limited to a specific type of ID.

The ID of the invention may at least be representing or comprising information about the food item, such as the type of food packaging and/or the dimensions of the food packaging.

Furthermore, the ID may comprise information of the material of the food packaging, the weight of the packaging and/or the food product in the packaging, information about the food product in the packaging, such as if the product is a warm, a cold or a frozen product and/or the texture of the food product, such as if the product is solid, fluid, hard, soft, etc.

In one embodiment of the invention, the robotic arm is configured for gripping the food item from a temporary storage table and repositioning the food item to a package area, such as a tray, and/or a package object, such as a bag.

The embodiment is particularly, but not exclusively, advantageous for automatically repositioning the food item from a storage area to the package area and/or the package object and automatically collecting and sorting the food item into a finished order.

In one embodiment of the invention, the at least one protrusion is positioned inside one of the two suction cups for providing a push onto an associated lid of a food item such that the lid is securely fixed, preferably a protrusion is positioned inside each of the suction cups.

The embodiment is particularly, but not exclusively, advantageous for providing a solution wherein the food item is guaranteed to be closed correctly and ready for being picked up by a robot arm.

If the lid is not securely locked and the robotic arm grips the food item at the lid, all the food in the food item would potentially be spilt all over the place and thereby wasted. Subsequently, the order would be late and moreover a lot of cleaning would be necessary, which may stop the entire system.

In one embodiment of the invention, the control system is configured to transmit data to a database and to receive data from a database, said data preferably being provided from at least the vision system.

The embodiment is particularly, but not exclusively, advantageous for obtaining a database with information usable for optimizing the performance of the robot picking assembly.

It should be understood that the control system is configured to transmit data to a database and to receive data from a database, said data preferably being provided from one or more of:
- a vision system, and/or a scanner and/or a sensor.

In one embodiment of the invention, the one or more food items are sorted into one gathered order at a package area or in a package object, wherein an ID of the food item(s) provides the information of when an order is completed.

In one embodiment of the invention, the assembly comprises an algorithm adapted to provide a gripping command of the associated food item based on information provided from the vision system.

The embodiment is particularly, but not exclusively, advantageous for obtaining a fully automated system providing optimal performance based on inputs.

In one embodiment of the invention, the assembly comprises an algorithm adapted to provide a sorting command of the associated food item based on the ID of the food item, such as providing a packaging sequence.

The embodiment is particularly, but not exclusively, advantageous for providing a sorting of the food item, wherein the collecting of food item into an order bag is not random, but is the optimal sorting, such that warm food is positioned strategically away from cold food.

Based on ID information the most suitable packaging sequence for any specific order can be obtained.

In one embodiment of the invention, the algorithm is a machine learning algorithm adapted to be trained by the data from the database for:
- optimizing the gripping of the food item and/or
- optimizing the sorting of the food item(s), such as optimizing a packaging sequence.

The embodiment is particularly, but not exclusively, advantageous for providing a system wherein the performance of the system is optimized for any order performed.

In a second aspect, the invention further relates to a method of picking up a food product, said method comprising the steps of:
- providing a gripping position of the food item by a vision system,
- determining which of at least two suction cups is to be used for picking up the food item based on information provided by an ID of the food item,
   the at least two suction cups being:
   - an inner suction cup, being the smallest suction cup, or
   - an outer suction cup, being the largest suction cup,
- arranging the determined suction cup(s) in contact with the item,
- starting a suction pressure in at least one internal air channel connected to the suction cup(s) determined to pick up the food item,
- picking up the food item,
- moving a robotic arm, and
- releasing the food item at a package area and/or a package object,
wherein the steps of the method can be executed in any order and/or executed simultaneously.

The second aspect of the invention is particularly, but not exclusively, advantageous for providing a method wherein the handling and picking up of food items are automatically performed, and for providing a method of lifting and handling a great amount of different and varying food items optimally and in the most secure way, thereby making sure not to damage neither the food items, nor the packaging, nor the food product in the packaging.

In one embodiment of the invention, the suction pressure is provided through either one of or both of the two internal air channels.

The embodiment is particularly, but not exclusively, advantageous for having numerous mode selections, thereby providing a method to handle and pick up any food item optimally.

In one embodiment of the invention, the method further comprises the step:
- completing an order by picking up more food items received in an order and releasing the food items in a package area and/or a package object.
In one embodiment of the invention, the method further comprises the steps:
- providing information from an ID on the food item, such as a bar code, a matrix code, a QR code, preferably a pre-printed label,
   said information being at least:
   - height, width, and length of the food item,
- scanning the ID on the associated food item by a vision system,
- storing information provided by the vision system in a database.

In one embodiment of the invention, the method further comprises the step:
- determining the suction pressure to be used to pick up the food item by the robot arm,
wherein the determination preferably is based on information provided from an ID on the food item, such as a bar code, a matrix code, a QR code.

In one embodiment of the invention, an algorithm is provided for:
- determining if the inner suction cup or the outer suction cup or both the suction cups is/are to be used to pick up the food item by the robot arm, and preferably determining which suction pressure is to be used to pick up the food item by the robot arm.

In one embodiment of the invention, the method further comprises the step of:
- using stored data in the database in at least one algorithm,
   said algorithm preferably being trained by machine learning for at least:
   - optimizing the picking up of the food item by the robotic arm.

In a third aspect, the invention further relates to a computer program comprising instructions which, when the program is executed by a computer, cause the computer to carry out at least the picking up step of the method in the second aspect.

The first, second and third aspect of the present invention may each be combined with any of the other aspects. These and other aspects of the invention will be apparent from and elucidated with reference to the embodiments described hereinafter.

Embodiments from the system/product should be seen as applicable to the method, and embodiments from the method should be seen as applicable for the product/system.

### DESCRIPTION OF THE DRAWING

Figure 1 illustrates a 3D drawing of the food handling system.
Figure 2 illustrates the food handling system from above.
Figure 3 illustrates a robotic arm packing a food item into a bag.
Figure 4 illustrates a cross-section of a robotic arm.
Figure 5 illustrates robot picking assembly pushing down a lid.

### DETAILED DESCRIPTION OF THE INVENTION

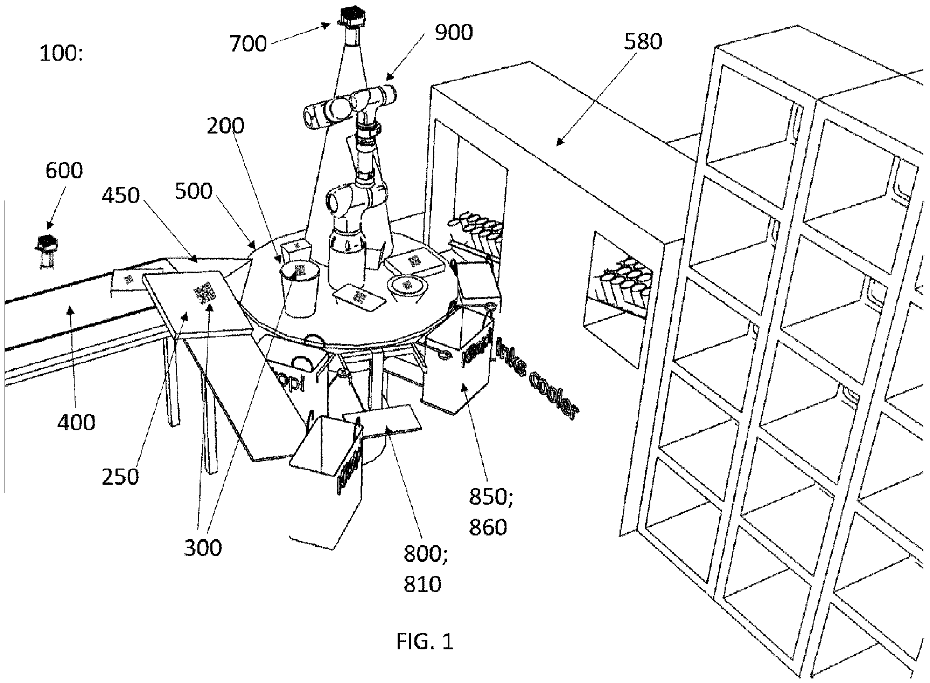

FIG. 1 illustrates a 3D drawing of a food handling system 100 with a robot picking assembly 900 for picking up at least one associated food item 200, such as a packaging comprising food, the robot picking assembly 900 comprising: a robotic arm 910.

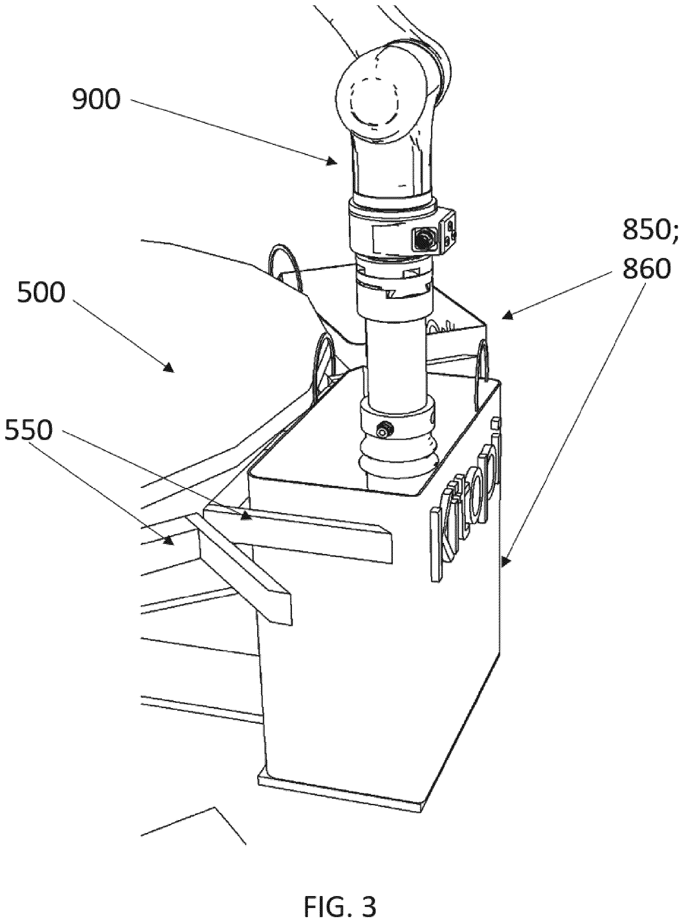

See FIG. 3, 4 and 5 for further details of the robot picking assembly.

The robot picking assembly may be a part of an even broader system for handling one or more associated food item(s) 200 with an associated ID 300, such as a packaging comprising food, said broader system illustrated in FIG. 1 may comprise one, or more, or all of:
- a reader, such as a scanner, configured for reading the ID 300 of the food item 200 (not shown),
- a conveyor 400, preferably a plurality of conveyors, for transporting the associated food 200 item to a temporary storage area 500, the conveyor in FIG. 1 comprises a slide 450 positioned at the end of the conveyor 400 towards the storage area 500 for guiding the associated food item 200 to the storage area.
- A temporary storage area 500, in FIG. 1 the area is a rotatable table being circular,
- a sensor 600, positioned at an arbitrary position along the conveyor 400, in FIG. 1 the sensor is a photocell 600,
- a vision system 700, such as a vision camara, for capturing information from the storage area 500,
- a package area 800, such as a tray 810, and/or or a package object 850, such as a bag 860,
- a robotic arm 910 for repositioning the food item 200 from the storage area 500 to the package area 800 and/or the package object 850,
- a control system, for controlling the robotic arm based on input from at least the vision system 700 (not shown).

The information represented in the ID 300 is at least:
- height, width, and length of the associated food item 200, and/or
- an indication of an order number of the associated food item 200.

Further, FIG. 1 illustrates a big food item 250 which is an oversized item 250 relative to the package area 800 or package bag 850, preferably said oversized food item 250 is to be handled manually.

The oversized food item 250 may be sorted out before entering the temporary storage area 500, or the oversized food item 250 may enter the storage area 500 and then be sorted out from the storage area.

The oversized food item 250 can be handled by the robotic arm 900 but is preferably handled manually.

Moreover, FIG. 1 illustrates a system 100 comprising a separate area 580 for cold food items, such as beverages, dressings, ice cream, and wherein the at least one robotic arm 900 is configured for gripping the cold food item, and preferably the separate area 580 also comprises extra items, such as disposable cutlery.

Also, FIG. 1 illustrates a vision system 700 focusing on part of the temporary storage area 500.

When a food item 200 enters the storage area 500 from the conveyor 400, it is detected by the vision system 700. If the storage area 500 is rotating, such as a rotating table, it is registered how much the table rotates via signals from the table, such that the system registers the movement of the item 200, and such that the robotic arm 900 can easily be controlled according to where on the storage area 500 it must grip for the item 200.

The robotic arm 900 provides the opportunity to automatically reposition the food item 200 from a storage area 500 to the package area 800 and/or the package object 850 and automatically collect and sort the food item 200 into a finished order.

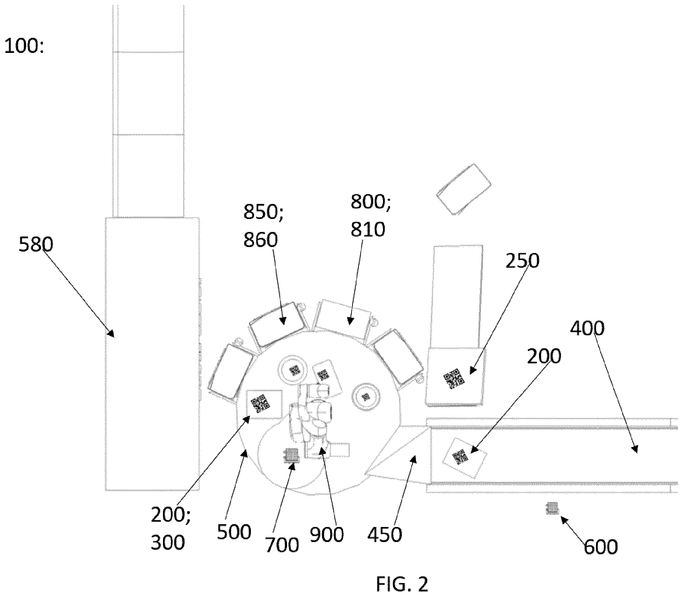

FIG. 2 illustrates a food handling system 100 from above, the illustrated system is corresponding to the system illustrated in FIG. 1.

FIG. 3 illustrates a robot picking assembly 900 comprising a robotic arm 910 packing a food item 200.

As is seen in FIG. 3, the robotic arm 910 is designed to fit into the bag.

Also, it is illustrated that the package area 850, such as a bag 860 as in FIG. 3, is attached to the temporary storage area 500 by two brackets 550.

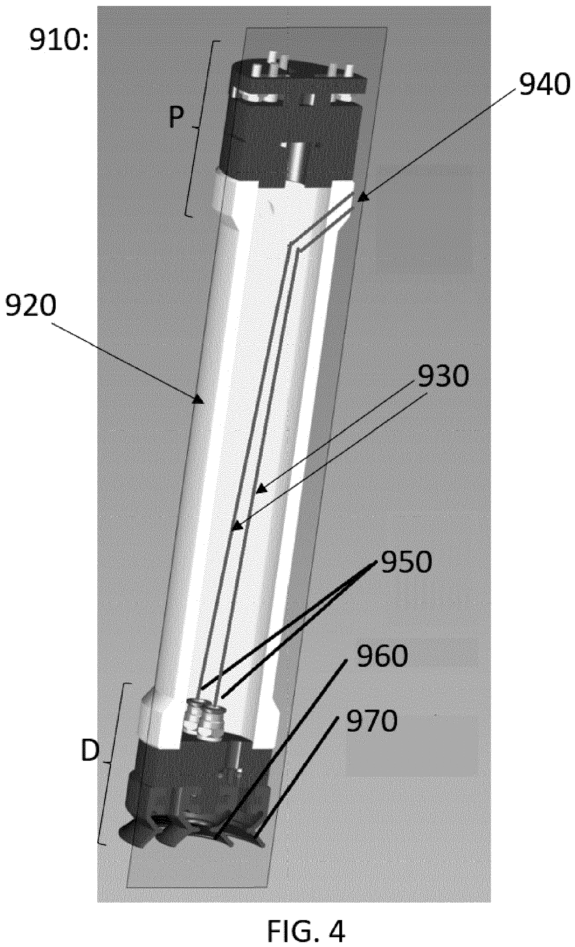

FIG 4 illustrates a cross-section of a robotic arm.

The illustrated robotic arm 910 of a robot picking assembly 900 for picking up at least one associated food item, such as a packaging comprising food, the robot picking assembly comprising:
- a robotic arm 910; said robotic arm comprising:
   - an elongated cylindrical chamber 920,
   - at least two internal air channels 930, a first and a second internal air channel, such as pipes or tubes,
   - at least two air suction connections 940, a first and a second air suction connection, the two air suction connections may be positioned in the same housing as illustrated in FIG. 4,
   - at least two vacuum fittings 950, a first and a second vacuum fitting,
   - at least two suction cups 960; 970;
      - an inner suction cup 960, being the smallest suction cup, and
      - an outer suction cup 970, being the biggest suction cup,
      said suction cups being positioned at the distal end D of the robotic arm 910 and being configured to be arranged in contact with the associated food items 2 to pick up and release associated food items,

   wherein the inner suction cup 960 is concentrically positioned inside the outer suction cup 970,
   wherein a first internal air channel 930 is connected to the inner suction cup 960 by a first vacuum fitting 950 and a second internal air channel 930 is connected to the outer suction cup 960 by a second vacuum fitting 950,
   wherein a first internal air channel 930 is connected to a first air suction connection 940 and a second internal air channel 930 is connected to a second air suction connection 940, and
   wherein the air suction connections 940 are positioned at the proximal end P of the chamber 920.

In FIG. 4 the at least two internal air channels 930 and the at least two vacuum fittings 950 are positioned inside the elongated cylindrical chamber 920. However, it should be understood that the at least two internal air channels 930 can also be positioned in the wall of the elongated cylindrical chamber 920 (not shown).

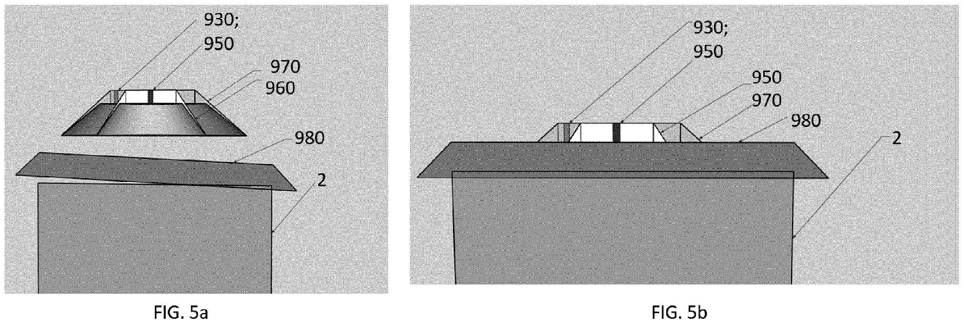

FIG 5a-b illustrate a robot picking assembly pushing down a lid.

The illustrated robot picking assembly comprises at least one protrusion (not shown) positioned inside one of the two suctions cups 960; 970 for providing a push onto an associated lid 980 of a food item 2, such that the lid is securely fixed, preferably a protrusion is positioned inside each of the suction cups 960; 970.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims may possibly be advantageously combined, and the mentioning of these features in different claims does not exclude that a combination of features is possible and advantageous.

## Claims

1. A robot picking assembly (900) for picking up at least one associated food item (2), such as a packaging comprising food, the robot picking assembly comprising:
- a robotic arm (910); said robotic arm comprising:
- an elongated cylindrical chamber (920),
- at least two internal air channels (930), a first and a second internal air channel, such as pipes or tubes,
- at least two air suction connections (940), a first and a second air suction connection,
- preferably at least two vacuum fittings (950), a first and a second vacuum fitting,
- at least two suction cups,
- an inner suction cup (960), and
- an outer suction cup (970),
said suction cups being positioned at the distal end (D) of the robotic arm (910) and being configured to be arranged in contact with the associated food items (2) to pick up and release associated food items,
wherein the inner suction cup (960) is concentrically positioned inside the outer suction cup (970),
wherein a first internal air channel (930) is connected to the inner suction cup (960) by a first vacuum fitting (950) and a second internal air channel (930) is connected to the outer suction cup (970) by a second vacuum fitting (950),
wherein a first internal air channel (930) is connected to a first air suction connection (940) and a second internal air channel (930) is connected to a second air suction connection (940), and
wherein the air suction connections (940) are positioned at the proximal end (P) of the chamber.

2. A robot picking assembly (900) according to claim 1, wherein the at least two internal air channels (930) and the at least two vacuum fittings (950) are positioned inside the elongated cylindrical chamber (920), and/or
wherein the at least two internal air channels (930) are positioned in the wall of the elongated cylindrical chamber (920).

3. A robot picking assembly (900) according to any of the preceding claims wherein, when in use, suction pressure is provided through one of or both of the two internal vacuum pipes (930).

4. A robot picking assembly (900) according to any of the preceding claims, wherein the assembly further comprises:
- a control system configured to receive a data input comprising:
- height, width, and length of the food item (2), and/or
- an indication of an order number of the food item,
and configured to control the suction pressure in the air channels (930) for creating a vacuum when picking up the associated food item (2).

5. A robot picking assembly (900) according to any of the preceding claims, wherein the assembly further comprises:
- a vision system (700), such as a vision camera, configured to provide information of at least:
- a gripping position of a food item (2) to be picked up,
preferably the vision system further provides information from:
- an ID (300), such as a bar code, a matrix code, a QR code, Radio Frequency ID, the information provided from the ID (300) being at least:
- height, width, and length of the food item (2), and/or
- an indication of an order number of the food item (2),
preferably, the ID (300) is provided on a pre-printed label positioned on the associated food item (2).

6. A robot picking assembly (900) according to any of the preceding claims, wherein the robotic arm (950) is configured for gripping the food item (2) from a temporary storage area (500), such as a table, and reposition the food item (2) to a package area (850), such as a tray, and/or a package object (860), such as a bag.

7. A robot picking assembly (900) according to any of the preceding claims, said robot picking assembly comprising at least one protrusion positioned inside one of the two suction cup (960, 970) for providing a push onto an associated lid (980) of a food item (2), such that the lid is securely fixed, preferably a protrusion is positioned inside each of the suction cups.

8. A robot picking assembly (900) according to claim 5, wherein the control system is configured to transmit data to a database and to receive data from a database, said data preferably being provided from at least the vision system (700).

9. A robot picking assembly (900) according to any of the preceding claims, wherein the assembly comprises an algorithm adapted to provide a gripping command of the associated food item (2) based on information provided from the vision system (700).

10. A robot picking assembly (900) according to any of the preceding claims, wherein the assembly comprises an algorithm adapted to provide a sorting command of the associated food item (2) based on the ID (300) of the food item, such as providing a packaging sequence.

11. A robot picking assembly (900) according to any of the preceding claims, wherein the algorithm is a machine learning algorithm adapted to be trained by the data from the database for:
- optimizing the gripping of the food item (2) and/or
- optimizing the sorting of the food item(s), such as optimizing a packaging sequence.

12. A method for picking up a food product, preferably by a robot picking assembly (900) according to claim 1, said method comprising the steps of:
- providing a gripping position of the food item (2) by a vision system (700),
- determining which of at least two suction cups (960; 970) is to be used for picking up the food item based on information provided by an ID (300) of the food item,
the at least two suction cups being:
- an inner suction cup (960), and/or
- an outer suction cup (970), wherein the suction pressure is provided through either one of or both of two internal air channels (930),
- arranging the determined suction cup(s) (960, 970) in contact with the item (2),
- starting a suction pressure in at least one internal air channel (930) connected to the suction cup(s) determined to pick up the food item (2),
- picking up the food item (2),
- moving a robotic arm (910),
- releasing the food item (2) at a package area (800) and/or a package object (850),
- preferably, if needed, completing an order by picking up more food items received in an order, and releasing the food items in a package area and/or a package object,
wherein the steps of the method can be executed in any order and/or executed simultaneously.

13. A method according to claim 12, said method further comprising the steps:
- providing information from an ID (300) on the food item (2), such as a bar code, a matrix code, a QR code, preferably a pre-printed label,
said information being at least:
- height, width, and length of the food item,
- scanning ID on the associated food item by a vision system (700),
- storing information provided by the vision system in a database,
preferably using stored data in the database in at least one algorithm, and
preferably being trained by machine learning for at least:
- optimizing the picking up of the food item by the robotic arm (910).

14. A method according to claim 12-13, said method further comprising the step:
- determining suction pressure to be used to pick up the food item (2) by the robot arm (910),
wherein the determination preferably is based on information provided from an ID (300) on the food item, such as a bar code, a matrix code, a QR code.

15. A method according to claim 12-14, wherein an algorithm is provided for:
- determining if the inner suction cup (960) or the outer suction cup (970) or both the suction cups is/are to be used to pick up the food item (2) by the robot arm (910), and preferably determining which suction pressure is to be used to pick up the food item by the robot arm.
